# EUROPEAN PATENT APPLICATION

(11) **EP 2 567 876 A2**
(43) Date of publication of application: **13.03.2013**
(21) Application number: 12178434.2
(22) Date of filing: 30.07.2012
(51) Int. Cl.: B61H 3/00, B60T 13/74

(54) **Electrically operated brake**

(30) Priority: 28.07.2011 GB 201112972
(71) Applicant: R. Bance & Company Limited, Surbiton, Surrey KT6 5HE (GB)
(72) Inventor: Ryan, Tony, Surrey, GU22 9XJ (GB); Binder, Kevin Mark, Surbiton, Surrey KT6 5HE (GB)
(74) Representative: Phillips & Leigh

(57) **Abstract**

An electrically actuated brake may be operated remotely, e.g. attached to a battery powered lightweight rail maintenance vehicle, or a trailer towed by such a vehicle. It comprises an electrically operated actuator (34, Fig. 4) having a control system (36, Fig. 4) responsive to both
(i) an electrical signal variable between substantially two discrete states (e.g. "on" and "off") and
(ii) a continuously variable electrical signal;

the control system controlling the actuator in response to the signal variable between the two discrete states to move the brake between a fully applied and a fully released condition; the control system being further operative to control the actuator in response to the continuously variable signal to move the brake so as to provide a continuously variable braking force/torque. Both signals (i) and (ii) are applied to the control system through a common control line 76. Brake shoes 22 are moved by the actuator via a mechanical linkage 26, against a resilient bias provided by tension springs (72, Fig. 4).

## Description

### Field of the Invention

This invention concerns friction brakes for rotating members, such as vehicle wheels. The brakes concerned are particularly suitable for lightweight, electrically powered rail maintenance/emergency transport trolleys, and/or for unmotorised trailers which are coupled to such trolleys in use. However the brakes of this invention also have a wide variety of other uses.

### Background of the Invention

Braking systems for such rail maintenance trolleys and trailers are normally pneumatic, hydraulic or entirely mechanical. Solenoid operated brakes have been used on the trailers but these essentially provide only two operative states: either "brake fully applied" or "brake fully released". They therefore function only as a parking brake and not as a service brake capable of providing continuously variable braking forces/torques to the vehicle wheels while they are in motion. The present invention seeks to provide an electrically powered brake which can be operated not only as a parking brake but also, when required, as a continuously variable force/torque service brake. Electrically operated brakes are known which provide both parking brake and service brake functions (see e.g. WO92/21542 and US4804073), but these involve relatively complex electrical circuitry and wiring looms, with essentially separate control circuits for the service brake and parking brake functions respectively.

### Summary of the Invention

Accordingly, the present invention provides a brake comprising an electrically operated actuator as defined in claim 1. The electrically actuated and controlled brake provides simple remote control operation which may be applied not only to a powered rail trolley, but also to unmotorised trailers pushed or pulled by such a trolley.

The actuator may for example comprise an electric motor mechanically coupled to move the brake. The electric motor may be a stepper motor. The actuator may further comprise a reduction gearbox arranged to drive a rotary arm through an angle whose end points correspond to the brake fully applied and the brake fully released conditions respectively, the rotary arm being mechanically coupled so as to move at least one brake shoe. The brake shoe may comprise a drum brake, for example operating against a substantially cylindrical inner surface of a rail wheel rim; or against a separate brake drum. Additionally or alternatively the brake shoe may comprise a disc brake, for example part of a calliper operating against a rail wheel flange; or against a separate brake disc.

The control system may comprise a limit switch, e.g. operated by the actuator or its mechanical coupling to the brake, to indicate a "home" position. The home position preferably corresponds to the brake fully released condition. The brake may be resiliently biassed towards the brake fully applied condition. This can be advantageous in providing fail-safe braking operation.

The control system may comprise a microprocessor having a memory in which the control signal amplitude is mapped to the actuator displacement. For example, when the control signal amplitude is at a maximum, the actuator and mechanical coupling may move to the home position. When the control signal is at a minimum, the actuator may be arranged so as not to move against the resilient bias. This can be advantageous, in providing automatic brake wear compensation.

The continuously variable electrical signal may be a voltage derived from a user-operated potentiometer, e.g. coupled to a brake control lever or pedal. The electrical signal variable between substantially two discrete states may be a voltage derived from a user-operated on/off switch. Again this switch may be hand or foot operated. It may be biassed to the open position. Together with a brake resiliently biassed towards the fully applied condition, this may be advantageous in providing "dead man's" safety operation.

The invention and some of its preferred features and advantages are further described below with reference to an illustrative embodiment shown in the drawings.

### Brief Description of the Drawings

Figure 1 shows a battery powered rail maintenance trolley towing an unmotorised trailer.
Figure 2 shows four side pods prior to assembly into the trolley and trailer of Figure 1.
Figure 3 shows a brake mechanism embodying the present invention, mounted on a side beam forming part of one of the side pods.
Figure 4 is an enlarged view of the actuator and control system housing shown in Figure 3, with a cover removed and control circuitry partly removed, for ease of visibility.
Figure 5 shows part of the beam of Figure 1 from the opposite side, in which the actuator output shaft, rotary arm and limit switch are visible.
Figure 6 is an enlarged view of one of the brake shoes of Figure 4, also showing a biasing spring during fitment.

### Detailed Description

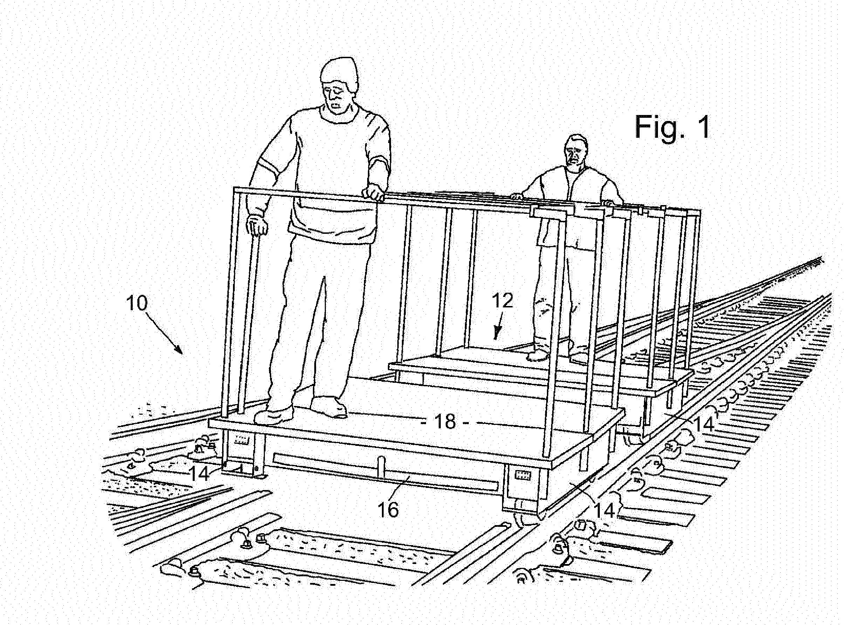

The trolley 10 and trailer 12 shown in Figure 1 are of generally similar construction, each being assembled from a pair of side pods 14 with internal wheels, cross beams 16 interconnecting the side pods 14 to form a chassis which supports deck panels 18. These components can be readily dismantled from each other by hand and fitted into a compact space, e.g. a small van, estate car or pickup, for transport to site.

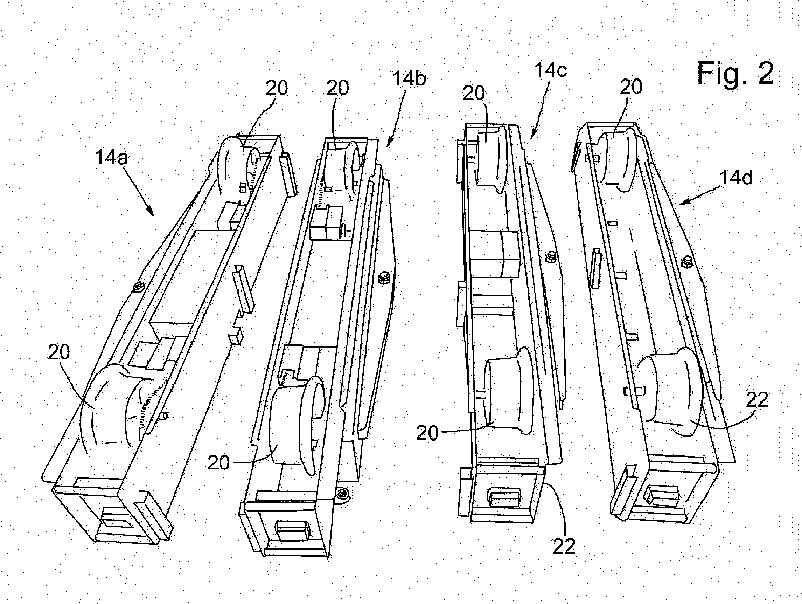

The side pods are shown dismantled in Figure 2 and upside down so that the internal wheels 20 are clearly visible. Side pods 14a and 14b are provided with electric traction motors (not shown) for driving their wheels 20. These pods therefore are used to make up the powered trolley 10. The side pods 14c and 14d are unmotorised and therefore are used to form the trailer 12. Pod 14c contains a braking mechanism embodying the present invention.

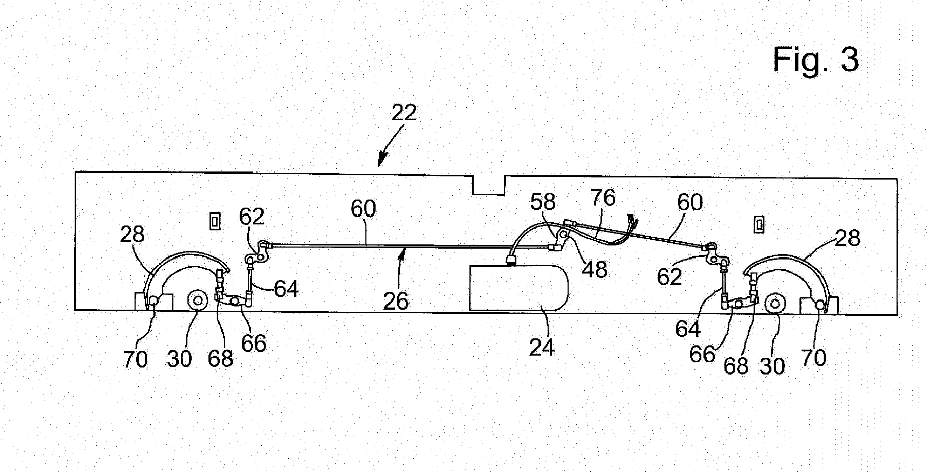

Figure 3 shows a side beam 22 used to form a wall of the pod 14c which lies inboard in the assembled trailer 12. The surface of the side beam visible in Figure 3 is internal to the finished pod and has the brake mechanism mounted to it. The brake mechanism includes an actuator and control system housing 24, mechanical linkage 26 and a pair of brake shoes 28. The rims of wheels 20 of side pod 14c are internally machined to provide cylindrical surfaces against which the friction pads of the brake shoes 28 act. Alternatively in an unillustrated variant the flanges of the wheels 20 could be extended for co-operation with brake callipers mechanically coupled for operation by the actuator. Yet alternatively the braking surface could be provided on a separately formed drum or disc fixed to the wheel. Journals 30 for stub shafts of the wheels 20 are visible in Figure 3.

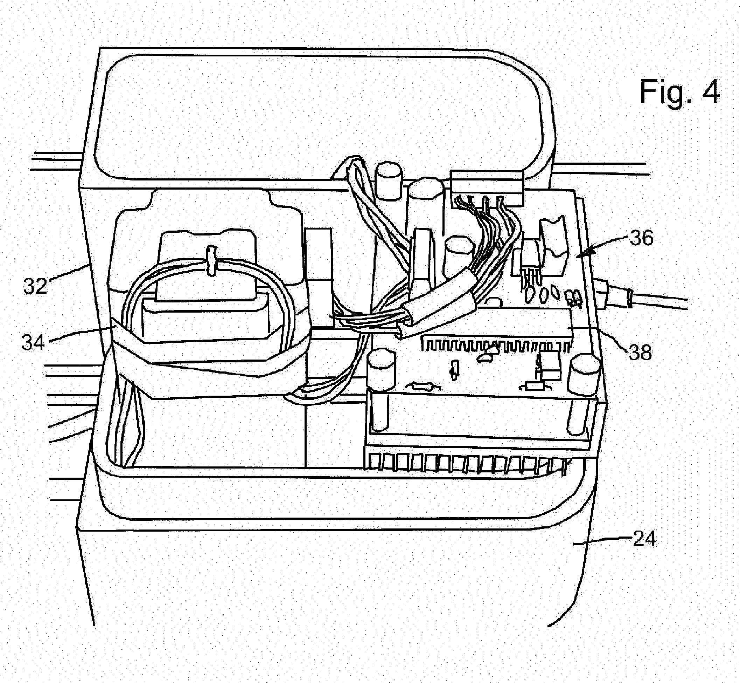

Figure 4 shows the actuator and control system housing 24 with its cover 32 removed. The housing 24 contains the actuator 34 which as shown is a stepper motor 34 with integral reduction gearbox. However any other suitable form of electrically powered actuator (linear as well as rotary) can be used to move the brake shoes into and out of contact with the wheel braking surfaces and provide continuously variable positioning between a brake fully disengaged and a brake fully engaged condition. The control system comprises an electronics package 36 including a (preferably programmable) microprocessor 38.

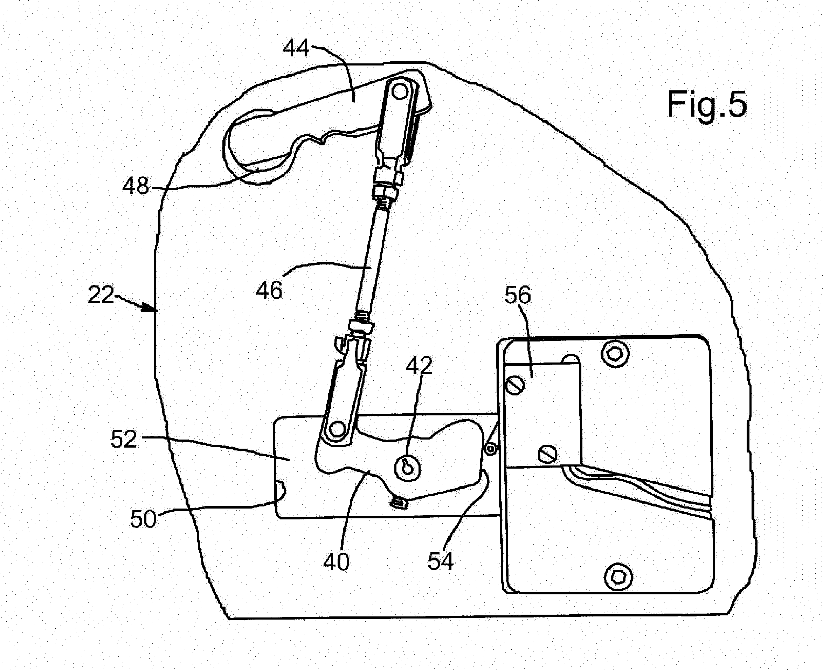

Referring to Figure 5, a window 50 in the beam 22 is shown, through which the bottom of the actuator gearbox 52 is visible. A rotary arm 40 is fixed to the actuator (gearbox) output shaft 42. The rotary arm 40 is mechanically coupled to a further rotary arm 44 by a first adjustable pull rod 46. The further rotary arm 44 is fixed to rotate with a first rocker arm shaft 48. A lobe 54 on the rotary arm 40 co-operates with a limit switch 56 to govern the home position of the actuator 34, the associated mechanical linkage 26 and of the brake shoes 28.

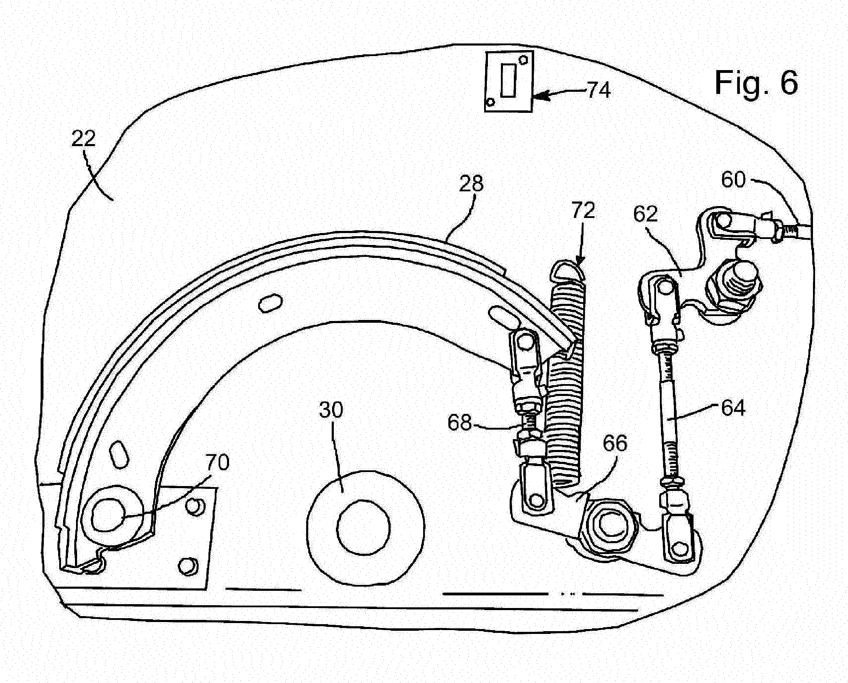

Referring to Figure 3 in conjunction with Figure 6, the first rocker arm shaft 48 passes through the beam 22 and to its end visible in Figure 3 is fixed a first rocker arm 58. This in turn is mechanically connected for moving the brake shoes 28 via second adjustable pull rods 60, bell cranks 62, third adjustable pull rods 64, second rocker arms 66 and 4^{th} adjustable pull rods 68. The brake shoes 28 are mounted on pivot shafts 70 at their ends opposite to the 4^{th} adjustable pull rods 68. Each brake shoe is biassed towards contact with the wheel 20 braking surface by a tension spring 72 connected between the associated second rocker arm 66 and an eye bracket 74 fixed to the beam 22. (The springs 72 are omitted in Figure 3. In figure 6 the spring is shown during fitment, prior to tensioning and engagement of its upper hooked end in the eye bracket 74). When no electrical power is supplied to the actuator 34, the springs 72 pull the brake shoes into full engagement with the braking surfaces of the wheels 20. The actuator can be controlled to pull the brake shoes away from the wheel braking surfaces against this spring bias. For example when the voltage on control cable 76 rises from zero to a first threshold value, the map in the processor 38 memory may cause the control circuitry 36 to provide a predetermined number of movement pulses to the stepper motor of the actuator 34, moving the output shaft 42 through an angular increment which pulls the shoes slightly away from the wheel braking surfaces against the spring bias. When the control voltage reaches a second threshold higher than the first, the shaft 42 is moved through a further angular increment. Where the angular increments are sufficiently small, the movement of the output shaft and associated mechanical elements of the braking system is substantially continuously variable.

As the shaft 42 moves against the spring bias, the frictional engagement between the brake pads 22 and the wheel braking surfaces becomes less with each increment, i.e. it likewise reduces substantially continuously. Eventually it will reach a zero level at which the brake is effectively fully disengaged. The zero friction level may be (and preferably is) reached before the home position of the actuator is reached. When the control voltage reaches its maximum, the processor map causes the control circuitry 36 to supply movement pulses until the rotary arm 40 reaches its home position as governed by the limit switch 56.

When the control voltage on lead 76 falls to a predetermined threshold, the processor map causes the control circuitry to supply a predetermined number of movement pulses to the stepper motor, so that the shaft 42 rotates through a predetermined angular increment in the direction of the spring bias. Thus the brake pads may also be moved towards the "brake applied" condition. Between the supply of movement pulses and while the control voltage on the lead 76 is greater than the lowest threshold value, the stepper motor is energised to resist any movement under the spring bias. However if power to the stepper motor is cut or if the voltage on the control line 76 falls to zero (in either case whether deliberately or through accident, such as due to component failure), the brake pads move into the fully engaged condition under the spring bias. The brake therefore operates in a fail safe mode. The control voltage/shaft 42 position curve mapped in the processor memory may be nonlinear. A different curve may be followed in the direction against the spring bias compared to the bias assisted direction - i.e. there may be hysteresis.

The voltage on the control line 76 may be provided by an operator controlled potentiometer so as to be continuously variable, to provide correspondingly substantially continuously variable positioning of the brake pads 28 and hence operation of the brake mechanism as a service brake. However the voltage on the control line 76 may also be provided via a simple on/off switch so as to vary between substantially two discrete states of zero volts ("off") and the maximum control voltage ("on"). In this case the brake is moved between the fully applied and fully disengaged conditions without stopping in between, i.e. it functions as a parking brake. When the control signal is off, the actuator provides substantially no resistance to the spring bias, which therefore moves the brake pads to the fully engaged condition. When the control signal is on, the actuator moves the mechanical linkage 26 to the home position governed by the limit switch 56 and the brake pads are in the fully disengaged condition. The same control system and mechanical components can be used in either control mode, i.e. switch controlled or potentiometer controlled. The trailer 12 shown in Figure 1 uses the switch or two state control option, operated from the powered trolley 10. However other towing vehicles may use the potentiometer or continuously variable control option, e.g. via a driver's foot pedal. The same trailer and braking system may be used with either towing vehicle.

Thus the present invention may provide some or all of the following features and advantages:
- Remote electrical operation of a friction brake or brakes, e.g. attached to a powered vehicle or an unpowered trailer.
- Application or release of braking force as required.
- Fail safe (brake applied) operation
- To be able to overcome and release spring applied brakes that will automatically reapply in the event of power failure, wiring failure, or trailer disconnection.
- To be operable in a simple on/off configuration allowing brakes to be either fully on or fully off but also allowing the brakes to be fully applied in the event of failure.
- To also be operable in a variable force/braking torque configuration where a variable control signal (e.g. voltage) can be applied to the mechanism from a remote location controlling the amount of force applied to the brake to be adjusted over a range, allowing the brakes to be fully on, fully off, or at any point in between (again with failsafe to a brake on condition).
- Operation for simple on/off by application of either a non-zero control voltage (usually brake off) or zero volts (usually brake on), usually via a switch, usually biassed to keep the brake applied.
- Operation of variable braking by a control voltage that is variable over a predetermined range (e.g. 5-15 volts). This is conveniently supplied by a dividing network incorporating a potentiometer that can be operated by any suitable user control (e.g. hand or foot operated).

## Claims

1. A brake (28, 40) comprising an electrically operated actuator (34) having a control system (36, 38, 56) responsive to both
(i) an electrical signal variable between two discrete states and
(ii) a continuously variable electrical signal;
the control system controlling the actuator in response to the signal variable between the two discrete states to move the brake between a fully applied and a fully released condition; the control system being further operative to control the actuator in response to the continuously variable signal to move the brake so as to provide a continuously variable braking force/torque,
**characterised in that** both the electrical signal variable between two discrete states and the continuously variable electrical signal are applied to the control system through a common control line (76).

2. A brake (28, 40) as defined in claim 1, in which the actuator comprises an electric motor (34) mechanically coupled to move the brake.

3. A brake (28, 40) as defined in claim 2, in which the actuator further comprises a reduction gearbox arranged to drive a rotary arm (40) through an angle whose end points correspond to the brake fully applied and the brake fully released conditions respectively, the rotary arm being mechanically coupled so as to move at least one brake shoe (28).

4. A brake (28, 40) as defined in claim 3 in which the brake shoe (28) operates against a substantially cylindrical inner surface of a rail wheel rim (20).

5. A brake (28, 40) as defined in any of claims 1-3, in which the brake shoe comprises part of a disc brake.

6. A brake (28, 40) as defined in any preceding claim, in which the control system comprises a limit switch (56).

7. A brake (28, 40) as defined in claim 6 in which the limit switch (56) is operated by the actuator (34) or its mechanical coupling (40) to the brake, to indicate a "home" position.

8. A brake (28, 40) as defined in claim 7 in which the home position corresponds to the brake fully released condition.

9. A brake (28, 40) as defined in any preceding claim, in which the brake is resiliently biassed towards the brake fully applied condition.

10. A brake (28, 40) as defined in claim 9 in which, when the control signal is at a minimum, the actuator (34) is arranged so as not to move against the resilient bias (72).

11. A brake (28, 40) as defined in any preceding claim, in which the control system (36) comprises a microprocessor (38) having a memory in which the control signal amplitude is mapped to the actuator displacement.

12. A brake (28, 40) as defined in claims 7 and 11, in which, when the control signal amplitude is at a maximum, the actuator (34) and mechanical coupling (40) move to the home position.

13. A brake (28, 40) as defined in any preceding claim, in which the continuously variable electrical signal comprises a voltage derived from a user-operated potentiometer.

14. A brake (28, 40) as defined in any of claims 1-12 in which the electrical signal variable between substantially two discrete states comprises a voltage derived from a user-operated on/off switch.

15. A brake (28, 40) as defined in claim 14, in which the on/off switch is biassed to the open position.
